(19) Europäisches Patentamt
European Patent Office
Office européen des brevets

(11) **EP 4 729 897 A1**

(12) **EUROPEAN PATENT APPLICATION**

(43) Date of publication:
**22.04.2026 Bulletin 2026/17**

(21) Application number: **25209216.8**

(22) Date of filing: **16.10.2025**

(51) International Patent Classification (IPC):
**G01H 9/00** (2006.01)    **G01M 11/00** (2006.01)
**H04J 14/00** (2006.01)    G01V 1/22 (2006.01)

(52) Cooperative Patent Classification (CPC):
**G01H 9/004; G01M 11/31; H04J 14/00;** G01V 1/226

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **21.10.2024 US 202418921700**

(71) Applicant: **SubCom, LLC**
**Eatontown, NJ 07724 (US)**

(72) Inventors:
• **Cai, Jin-Xing**
**Eatontown, 07724 (US)**
• **Pilipetskii, Alexei N.**
**Eatontown, 07724 (US)**

(74) Representative: **Arnold & Siedsma**
**Bezuidenhoutseweg 57**
**2594 AC The Hague (NL)**

(54) **ACOUSTIC SENSING USING SINGLE WAVELENGTH OPTICAL FREQUENCY DOMAIN REFLECTOMETRY FOR MULTI-SPAN SENSING**

(57)    A system and a method for monitoring an optical transmission path in an optical transmission system. The optical transmission system includes a sensing and interrogation unit and a plurality of sensing units positioned on the optical transmission path. An optical signal is transmitted to the plurality of sensing units for determining a status of one or more portions of an optical communication path. A plurality of reflected signals responsive to the optical signal are received. The plurality of reflected signals are transformed in at least one of: the frequency domain and the time domain. The status of one or more portions is determined using the transformed plurality of reflected signals.

FIG. 4a.

West    Subsea    East

EP 4 729 897 A1

**Description**

**TECHNICAL FIELD**

This disclosure relates generally to fiber-optic optical communication systems, and in particular to distributed acoustic sensing, and more particularly, to a distributed acoustic sensing using single wavelength optical frequency domain reflectometry for multi-span sensing.

**BACKGROUND**

Distributed acoustic sensing (DAS) using telecom optical fiber as distributed sensors are used to continuously detect spatial disturbances along transmission/sensing fiber(s) over long distances in real time. Existing DAS distributed sensing system are limited to performing sensing over fiber lengths of approximately 50-100 km (e.g., for available products, and expanding to 150 km in research units). Such systems typically include a DAS interrogator unit (IU), which can include a DAS transmitter and a DAS receiver, and one or more repeater-ed erbium doped fiber amplifiers (EDFAs) that may be used for amplification of signal(s) being transmitted to the IU. However, existing systems cannot sense multi-span links using such in-line amplifiers. Some existing systems use multiple DAS units that operate at different wavelengths. Others sense spans using wavelength-dependent optical loopback path, where optical bandpass filters are used to filter and/or select specific wavelengths for transmission a reverse direction. This makes undersea optical path systems employing the above sensing technologies more expensive and very hard to store backup units since almost all repeaters are unique.

For example, the DAS system may be based on Rayleigh backscattering (otherwise referred to as a Rayleigh-scattering-based DAS system). In this system, a coherent laser pulse may be sent along an optical fiber, and scattering sites within the optical fiber may cause the fiber to act as a distributed interferometer, e.g., with a gauge length approximately equal to the pulse length. The intensity, frequency and/or phase of any reflected light may be measured as a function of time after transmission of the laser pulse, which is known as coherent optical time domain reflectometry (COTDR).

In some existing systems, telecommunications optical fiber is used as a distributed sensor to detect spatial disturbances contiguously along the transmission/sensing fiber over long distances in real time. However, conventional sensing systems typically require multiple distributed acoustic sensing interrogation units operating at different wavelengths to sense different portions of the optical fiber, particularly when there are disrupting elements such as optical amplifiers along the cable, which then adds substantial structural and operational complexity and could lead to a higher error rate for data channels by the sensing system.

**SUMMARY**

The current subject matter relates to an optical communication system. The system may include a sensing and interrogation unit and a plurality of sensing units positioned on and communicatively coupled to the sensing and interrogation unit using an optical communication path. The sensing and interrogation unit may be configured to transmit an optical signal to the plurality of sensing units for determining a status of one or more portions of an optical communication path, receive a plurality of reflected signals responsive to the optical signal, transform the plurality of reflected signals in at least one of: a frequency domain and a time domain, and determine the status of the one or more portions using the transformed plurality of reflected signals.

The current subject matter may include one or more of the following optional features. The optical signal may be a single wavelength optical signal.

The plurality of reflected signals may be transformed in the frequency domain to determine one or more locations in the optical communication path corresponding to an approximate location of a reflected signal in the plurality of reflected signals. The plurality of reflected signals transformed in the frequency domain may be transformed in the time domain to determine one or more changes to the reflected signal during a predetermined period of time, and determine a precise location of the reflected signal. Transformations of the reflected signals in the frequency domain and the time domain may be performed using a fast Fourier transform. The plurality of reflected signals may include at least a portion of a first plurality of reflected signals received during a first period of time and at least a portion of a second plurality of reflected signals received during a second period of time, wherein the second period of time may be subsequent to the first period of time.

The sensing and interrogation unit may include a transmitting optical device configured to transmit the optical signal to the plurality of sensing units.

The transmitting device may include a laser source configured to generate the optical signal. The laser source may include at least one of the following: a sweeping laser, a continuous wave laser, a multi-tone frequency laser, and any combination thereof.

The sensing and interrogation unit may include a receiving optical device communicatively coupled to the optical transmission path and configured to receive the plurality of reflected signals.

The optical communication path may be a distributed acoustic sensing optical transmission path.

The optical signal may include an interrogation signal.

The current subject matter also relates to a method for monitoring an optical transmission path in an optical transmission system. The optical transmission system may include a sensing and interrogation unit and a plurality of sensing units positioned on the optical transmission path. The method may include transmitting an optical signal to the plurality of sensing units for determining a status of one or more portions of an optical communication path, receiving a plurality of reflected signals responsive to the optical signal, transforming the plurality of reflected signals in at least one of: the frequency domain and the time domain, and determining the status of the one or more portions using the transformed plurality of reflected signals.

The current subject matter may include one or more of the following optional features. The optical signal may be a single wavelength optical signal. The plurality of reflected signals may be transformed in the frequency domain to determine one or more locations in the optical communication path corresponding to an approximate location of a reflected signal in the plurality of reflected signals. The plurality of reflected signals transformed in the frequency domain may be transformed in the time domain to determine one or more changes to the reflected signal during a predetermined period of time, and determine a precise location of the reflected signal. Transformations of the reflected signals in the frequency domain and the time domain may be performed using a fast Fourier transform. The plurality of reflected signals may include at least a portion of a first plurality of reflected signals received during a first period of time and at least a portion of a second plurality of reflected signals received during a second period of time, wherein the second period of time may be subsequent to the first period of time.

The sensing and interrogation unit may include a transmitting optical device configured to transmit the optical signal to the plurality of sensing units, and a receiving optical device communicatively coupled to the optical transmission path and configured to receive the plurality of reflected signals.

The transmitting device may include a laser source configured to generate the optical signal, wherein the laser source may include at least one of the following: a sweeping laser, a continuous wave laser, a multi-tone frequency laser, and any combination thereof.

The details of one or more variations of the subject matter described herein are set forth in the accompanying drawings and the description below. Other features and advantages of the subject matter described herein will be apparent from the description and drawings, and from the claims.

## BRIEF DESCRIPTION OF THE DRAWINGS

The accompanying drawings, which are incorporated in and constitute a part of this specification, show certain aspects of the subject matter disclosed herein and, together with the description, help explain some of the principles associated with the disclosed implementations. In the drawings,

FIG. 1 illustrates an exemplary optical communication system;

FIG. 2a illustrates an example of repeater incorporating a high-loss loopback (which may be incorporated into the system shown in FIG. 1);

FIG. 2b illustrates an example of a repeater;

FIGS. 3a-b illustrate plots showing relationships between beating frequencies and time in a receiver;

FIG. 4a illustrates an example optical communication system that may be used for performing determination of a status of one or more portions (e.g., spans) of an optical communication path, according to some implementations of the current subject matter;

FIG. 4b illustrates examples of data channel signal flows in the optical communication system shown in FIG. 4a, according to the current subject matter;

FIG. 4c illustrates examples of DAS channel signal flows in the optical communication system shown in FIG. 4a, according to the current subject matter;

FIG. 5 illustrates an example windowed FFT technique, according to the current subject matter;

FIG. 6a illustrates an example process for performing a windowed FFT by the interrogation and sensing unit and/or terminal, according to the current subject matter;

FIG. 6b illustrates another example process for performing a windowed FFT by the interrogation and sensing unit and/or terminal, according to the current subject matter;

FIGS. 7a-b illustrate an example of sliding windowed FFT process, according to the current subject matter;

FIG. 8 illustrates an example process for performing a sliding window FFT by the interrogation and sensing unit and/or terminal, according to the current subject matter;

FIGS. 9a-c illustrate various implementations of repeaters that may be implemented in the system shown in FIG. 4a, according to the current subject matter;

FIG. 10 illustrates another implementation of a repeater that may be implemented in the system shown in FIG. 4a, according the current subject matter;

FIG. 11 illustrates an example process, according to the current subject matter; and

FIG. 12 illustrates an example system, according to the current subject matter.

## DETAILED DESCRIPTION

To address these and potentially other deficiencies of currently available solutions, the current subject matter relates to methods, systems, articles of manufacture, and the like that can, among other possible advantages, provide a sensing and interrogation unit, which may include a transmitter and a receiver, for multi-span acoustic sensing systems, and in particular, to a sensing and interrogation unit that may use a single wavelength optical signal to perform multi-span sensing in optical communication systems.

In existing distributed acoustic sensing (DAS) systems, a DAS signal (e.g., light signal) may be transmitted by a DAS device (e.g., DAS interrogator) from an outbound optical cable. This DAS signal may be referred to as a transmit DAS signal. The transmit DAS signal may propagate along a first optical fiber of a bidirectional, dedicated and/or any other fiber pair of the optical cable in a first direction and may be periodically amplified by one or more optical amplifiers spaced along the fiber. Without limitation, a fiber pair may refer to actual fiber pairs, separate cores and/or modes in the same fiber pair, and/or to one or more bidirectional transmission signals in the same core, and/or any other types of fiber pairs.

In some cases, the DAS system may provide undersea optical cable for extending DAS range. For example, DAS range may be extended by transmitting and/or amplifying a DAS signal along multiple spans of a first optical fiber, routing and/or bypassing the DAS signal from the first optical fiber to a second optical fiber that may be different from the first fiber via, for example, a high-loss loopback (HLLB) architecture and/or an amplified-filtered loop back (AFLB) architecture, and returning and/or amplifying the DAS signal along the same multiple spans back to a DAS device. The DAS device may then receive and process the DAS signal to detect and/or determine any changes in the DAS system environment. Moreover, at a predefined distance along the optical cable (e.g., after the "Nth" amplifier along the optical cable), the transmit DAS signal may be returned to the DAS device by routing and/or bypassing the DAS signal to a second optical fiber of the fiber pair of the optical cable using, for example, the HLLB or AFLB architecture.

Accordingly, broader coverage provided by the extended DAS range allows a DAS system to better monitor subsea related activities. For example, the optical cables of the extended DAS system may be used to detect ("hear") and/or monitor earthquakes, sea floor movement, ship signatures, passing of ships, dropping of anchors, dragging of fishing nets, etc. As such, the optical cables may effectively act as microphones to monitor potential issues and/or problems that may occur undersea, such as, for example, aggressions and/or potential aggressions to optical cables of a subsea optical communication system.

In the following description, the term "path" and/or "link" may refer to any type of communicative coupling and/or connection and may encompass, but is not limited to, an optical coupling and/or connection, electrical coupling and/or connection, electro-optical coupling and/or connection, electro-mechanical coupling and/or connection, electro-optical-mechanical coupling and/or connection, and/or any other type of coupling and/or connection that is capable of transmitting and/or receiving any type of signal.

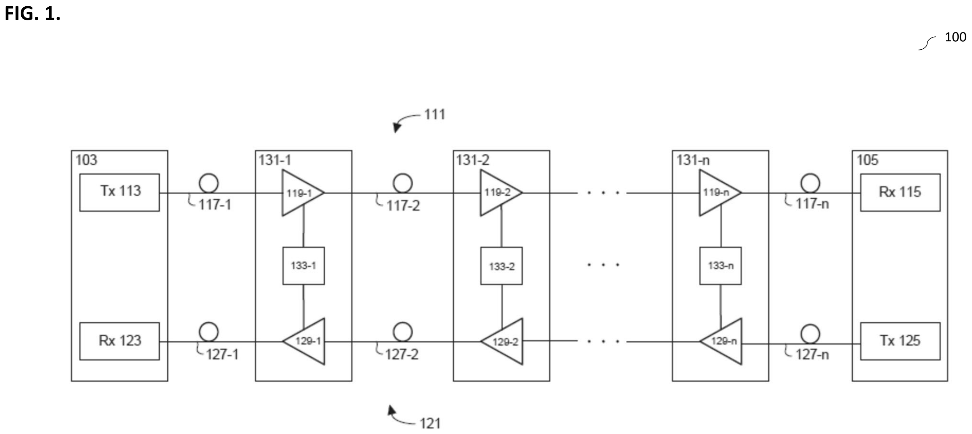

FIG. 1 illustrates an exemplary optical communication system 100 having two fibers forming a bi-directional fiber pair, distributed optical amplifiers disposed in both directional optical communication paths and an optical link between the two directional paths at each amplifier pair. The system 100 may use high-bandwidth fiber optics to transmit/receive vast amounts of data over long distances. The bidirectional optical communication system 100 may also be referred to as a long-haul optical communication system. Bidirectional data transmission may be implemented by constructing pairs of optical fibers, cores and/or modes within an optical cable and/or transmitting one or more channels, e.g., wavelength division multiplexed channels, per fiber pair.

The system 100 may include terminals 103 and 105 communicatively coupled using (e.g., unidirectional) optical paths 111, 121. The terminal 103 may include a transmitter 113 and a receiver 123. Likewise, the terminal 105 may include a receiver 115 and a transmitter 125. The transmitter 113 of the terminal 103 may be communicatively coupled to the receiver 115 of the terminal 105 via the path 111. The transmitter 125 of the terminal 105 may be communicatively coupled to the receiver 123 of the terminal 103 via the communication path 121. The paths 111, 121 may form a bidirectional optical fiber pair. For example, the optical path 111 may transmit signal(s), data, information, etc. and/or any combination thereof in one direction, e.g., from the transmitter 113 to the receiver 115. Optical path 121 may transmit signal(s), data, information, etc. and/or any combination thereof in another direction, e.g., from the transmitter 125 to the receiver 123.

Thus, with respect to the terminal 103, the optical path 111 may be referred to as an outbound path and the optical path 121 may be referred to as an inbound path. The optical path 111 may include one or more optical fibers 117-1 to 117-n and one or more optical amplifiers 119-1 to 119-n, the latter being positioned within respective repeaters 131-1 to 131-n. Similarly, the optical path 121 may include one or more optical fibers 127-1 to 127-n and one or more optical amplifiers 129-1 to 129-n, the latter being positioned within the respective repeaters 131-1 to 131-n. The optical fibers 117-1 to 117-n and 127-1 to 127-2 may be individual segments of a single optical fiber 117 and/or a single optical fiber 127, respectively, where the segments may be formed by way of coupling of the amplifiers to the optical fibers 117 and 127, as shown in FIG. 1.

For example, one or more optical amplifiers 119-1 to 119-n and/or 129-1 to 129-n may be Erbium-doped fiber amplifiers (EDFAs), and/or any other optical amplifiers. Further, while transmitters 113, 115 and receivers 123, 125 are shown as separate components, as can be understood, transmitter 113 and/or receiver 123 may be housed together in a single housing and may form a transponder and/or transceiver at the terminal 103. Similarly, transmitter 115 and receiver 125 may also be housed together in a single housing and may form a transponder and/or transceiver at terminal 105.

As stated above, the optical path pair (e.g., optical paths 111, 121) may be configured as a set of amplifier pairs 119-1 to 119-n and 129-1 to 129-n within repeaters 131-1 to 131-n communicatively coupled thereto using pairs of optical fibers 117 (e.g., using optical fibers 117-1 to 117-n) and 127 (e.g., using optical fibers 127-1 to 127-n), which may be included in an optical fiber cable together with other fibers and/or fiber pairs supporting additional path pairs. As discussed above and shown in FIG. 1, for example, each repeater 131-1 to 131-n may include at least a pair of respective amplifiers 119-1 to 119-n, 129-1 to 129-n for each path pair and/or may include additional amplifiers for additional path pairs. As shown in FIG. 1, for example, the repeater 131-1 may include amplifiers 119-1 and 129-1.

The optical amplifiers 119-1 to 119-n, 129-1 to 129-n may include EDFAs and/or other rare earth doped fiber amplifiers, Raman amplifiers, semiconductor optical amplifiers (SOAs). Each repeater 131-1 to 131-n may also include respective coupling paths 133-1 to 133-n that may be communicatively coupled between optical paths 111, 121. It may be understood that the term "couple" and/or "coupled" and/or "communicatively coupled", as used herein, may broadly refer to any connection, connecting, coupling, link, and/or linking, direct and/or indirect and/or wired and/or wireless connection, etc. but does not necessarily imply that the coupled components and/or elements are directly connected to each other.

It may be understood that the first and second optical fibers providing the transmit and return paths, respectively, may be included in and/or in form a bidirectional optical fiber pair. The fiber pair may be a standalone DAS-dedicated fiber pair. Alternatively, or in addition, it may be a payload carrying fiber pair, whereby the DAS signal may have a wavelength outside the payload channel wavelengths so that the DAS signal does not interfere with the payload signals. As can be understood, every "Nth" opposing set of amplifiers (e.g., the Nth amplifier coupled to the first optical fiber and the Nth amplifier coupled to the second optical fiber) may be paired and/or housed in the same respective repeater 131-1 to 131-n.

Using telecom optical fiber as a distributed sensor to achieve distributed acoustic sensing (DAS) has been used to detect spatial disturbances contiguously along the transmission/sensing fiber over long distances in real time. However, to date, distributed sensing has been limited to fiber lengths in the range of approximately 50 km for typical sensing applications and expanding to 150 km in some research units. Also, in repeater-ed DAS systems with erbium-doped fiber amplifiers (EDFA), it is typical that only the first fiber span that is adjacent to the DAS interrogator unit (IU) (e.g., a DAS transmitter and receiver) can be sensed.

To sense multiple spans in an undersea network, conventional systems typically use multiple DAS interrogator units at different wavelengths. The maximum sensing frequency (in a multi-span sensing system) is determined by the sensing distance (not including the leading fiber spans (e.g., spans that do not have a loop back path, for instance, spans that extend from transmitter/receiver components to first repeater) covered by a particular DAS interrogator unit and corresponds to the total distance between the spans using the same optical filter wavelength. In such systems, the leading fiber spans do not count toward the sensing distance since the Rayleigh backscattering from these spans are filtered using filters at other wavelengths.

Further, in some existing repeatered systems that include EDFAs (i.e., multiple repeaters that include EDFA positioned on a communication path, as shown in FIG. 1), only the first span adjacent to the DAS interrogator unit can be sensed, while others cannot as Rayleigh signals do go back through subsea EDFAs because of isolators that are used at EDFAs' outputs, inputs, and/or both. To sense spans subsequent to any EDFA, an optical loopback path is used to route the Rayleigh signal back on a reverse optical path.

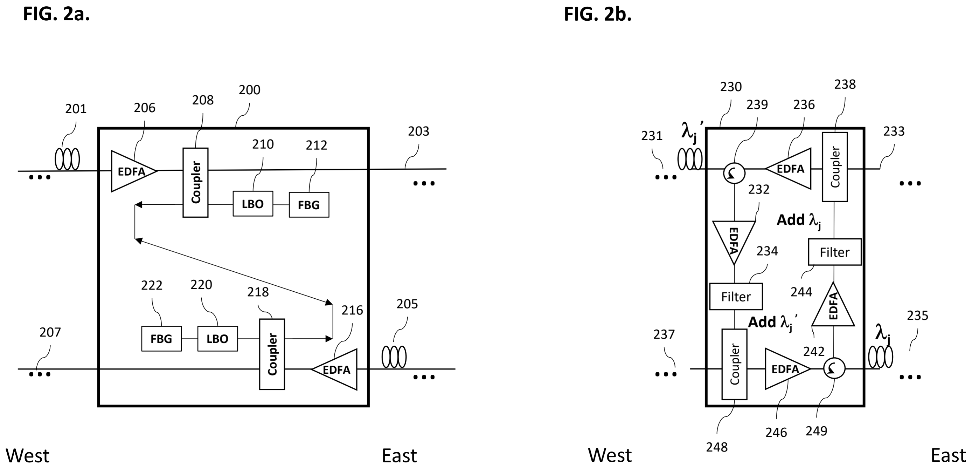

The system may use a high-loss loopback (HLLB) as a loopback path. FIG. 2a illustrates an example of repeater 200 incorporating a high-loss loopback (which may be incorporated into the system 100 shown in FIG. 1). The repeater 200 may be positioned on an optical communication path that may include communication spans for transmission of optical signals from west to east (as can be understood, the directions used herewith are provided for illustrative purposes only and are not meant to limit the current subject matter in any way) and for receiving of reflected optical signals as well as for receiving signals transmitted from east to west. The repeater may include an input 201 and an output 203 for transmitting signals from west to east (whether reflected or transmitted from east to west), and an input 205 and an output 207 for transmitting signals from east to west (whether reflect or transmitted from west to east).

The repeater 200 may further include an EDFA 206, a coupler 208 (e.g., a 10dB coupler), an optical attenuator (LBO) 210, and a fiber Bragg grating (FBG) 212 positioned on the transmitting side of the repeater 200. The repeater 200 may also include an EDFA 216, a coupler 218 (e.g., a 10dB coupler), an optical attenuator (LBO) 220, and a fiber Bragg grating (FBG) 222 positioned on the receiving side of the repeater 200. The coupler 208 may be communicatively coupled to the coupler 218. This may allow coupling of signals transmitted from east to west as well as those that are reflected in response to signals transmitted from west to east, and vice versa, as indicated by the double arrows.

A signal transmitted from west to east is received at the input 201 and subsequently amplified by the EDFA 206. It may then be transmitted to the output 203 (e.g., to next fiber span, and/or destination). The signal may also be coupled for any signals that are reflected in response to signals transmitted from east to west, where these signals are transmitted to the coupler 208 from the coupler 218. Likewise, a signal transmitted from east to west is received at the input 205 and subsequently amplified by the EDFA 216, and then transmitted to the output 207 (e.g., to next fiber span, and/or destination). The signal may also be coupled for any signals that are reflected in response to signals transmitted from west to east that may be transmitted to the coupler 218 from the coupler 208.

However, the HLLB repeater 200 based system typically suffers from a very high loss. The loss can be approximately 32dB with reflective grating or approximately 54 dB for Rayleigh back-scattering signals.

To resolve these issues, some systems use repeaters 230 shown in FIG. 2b. As shown in FIG. 2b, the repeater 230 may similarly be positioned on an optical communication path that may include communication spans for transmission of optical signals from west to east and for receiving of reflected optical signals as well as for receiving signals transmitted from east to west. The repeater 230 may include an input 231 and an output 233 for transmitting signals from west to east (whether reflected or transmitted from east to west), and an input 235 and an output 237 for transmitting signals from east to west (whether reflect or transmitted from west to east).

The repeater 230 may further include an EDFA 232, a filter 234, an EDFA 236, a coupler 238, and a circulator 239 positioned on the transmitting side of the repeater 230. The repeater 230 may also include an EDFA 242, a filter 244, an EDFA 246, a coupler 248, and a circulator 249 positioned on the receiving side of the repeater 230. The circulator 239 may communicatively be coupled to the output of the EDFA 236 and the input of the EDFA 232, which, in turn, may be communicatively coupled to the coupler 248. The coupler 248 may be communicatively coupled to the output of the EDFA 246. The circulator 249 may communicatively be coupled to the output of the EDFA 246 and the input of the EDFA 242, which, in turn, may be communicatively coupled to the coupler 238. The coupler 238 may be communicatively coupled to the output of the EDFA 236. The circulators 239 and 249 may be configured to redirect signals transmitted and/or received by the repeater 230 on optical communication path. The EDFAs 232, 236, 242, and 246 may be configured to amplify transmitted and/or received signals that are being transmitted between west and east sides of the repeater 230. The filters 234 and 244 may be configured to apply wavelength filtering techniques to filter one or more signal wavelengths of amplified signals (e.g., $\lambda_i$, $\lambda_i$'). Through use of the multiple EDFAs and filters, the repeater 230 may be configured to enhance signal power of the transmitted and/or reflected signals (e.g., by more than 50 dB).

However, with the above systems it may be difficult to sense multiple spans without the loss of acoustic frequency coverage. The acoustic frequency coverage of a single DAS interrogator unit is inversely proportional to the length of a particular sensing segment. For instance, only less than 5Hz acoustic frequency can be sensed if a 10,000 km link is sensed with a single DAS interrogator unit. Some systems partition the link into multiple segments, where each segment is covered by a different interrogator unit using a different wavelength. In this case, only the corresponding DAS interrogator unit's wave is allowed to transmit back to the reverse path (as, for example, is shown in FIG. 2b). Thus, such systems may require the use of optical bandpass filters (e.g., filters 234, 244, as shown in FIG. 2b) in their loopback path that may be specific to a particular interrogator unit for filtering out optical signals with different wavelengths.

In cases of maximum acoustic sensing frequency, each span may need to be covered by a single interrogator unit and each loopback path may need to be different (e.g., different optical filters may need to be used to allow transmission of signals having wavelength corresponding to the interrogator unit covering a particular span for transmission of reflected signals). This allows maximum acoustic frequency coverage. Thus, in an example optical communication/sensing system with 200 optical communication spans, 200 separate interrogator units (all having different wavelengths) and 200 loopback paths with different bandpass filters may be needed to obtain the maximum acoustic frequency coverage. This has several drawbacks.

At the outset, a system having 200 interrogator units (each at different wavelength) and 200 loopback paths (each with different bandpass filters) is not only very expensive, but also difficult to service and repair, as a substantial number of spare parts (e.g., interrogator units, filters, loopback paths, etc.) may need to be maintained to ensure uninterrupted coverage. Moreover, all 200 interrogator units need to be time-synchronized, time-staggered, and cannot be overlapped in time. Otherwise, the nonlinearity among WDM DAS wavelengths will degrade the sensing signal and drag the sensing sensitivity down.

Moreover, a duty cycle of each DAS channel may be very low (e.g., DAS pulses from all wavelengths cannot overlap in time). If 200 interrogator units are needed, the maximum duty cycle may be less than 0.5%.

Further, the interrogator unit's power usage may be very low. The DAS wavelength covering the very last span may need to be propagated through all leading EDFAs, but not being consumed for sensing only at the very last span. The DAS wavelength covering the first span still consumes optical power in the downstream EDFAs. If all DAS channels are allowed to transmit to the back of the communication link, the useful power for sensing may only be 0.5% for each DAS channel if there are 200 interrogator units co-existing on the link. If the DAS channels that may have finished sensing are dropped from the communication link, the power consumption could be increased. However, in this scenario, the sensing system may need to be carefully designed as the remaining channel power may be too strong to generate nonlinearities, thereby degrading the sensing sensitivity.

Further, some DAS signals may experience fading. This may make the Rayleigh signal weaker and/or completely disappear at times.

Moreover, with multiple DAS channels being used, only a single direction sensing may be possible, otherwise, a weak Rayleigh backscattering signal may be degraded by a co-propagating DAS signal being transmitted in the opposite direction. With single direction sensing, one DAS channel needs to sense the entire span, thus, the resulting sensitivity will be much lower as compared to bi-directional sensing (which senses a half of a span). To keep the same sensitivity, the number of repeaters may need to be doubled (half the span length), thus, further increasing the cost of the system.

Additionally, it is unlikely that DAS signals can coexist with signals being transmitted on data communication channels. The DAS sensing channels may significantly degrade performance of the data communication channels close to them since DAS channels are pulsed or OOK modulated using very strong pulse power. Further, short pulses of the DAS channels may lead to undesirable EDFA transient effects.

To resolve the above issues with existing systems, the current subject matter may be configured to perform multi-span sensing using a single wavelength to cover a long subsea optical communication link (e.g., greater than 10,000 km) that may include one or more identical repeaters without sacrificing acoustic frequency range (e.g., greater than 1kHz). Not only does the current subject matter system overcome the above technical drawbacks of existing systems, but it is also more cost effective for monitoring long subsea cables with optical amplifiers including ship detection, fish/whale watching, earthquake/tsunami/landslide forecast, etc.

The current subject matter system may include a sensing and interrogation unit (e.g., positioned at one end of the optical sensing communication path, and/or at each end of such path) and one or more sensing units (e.g., repeaters) positioned on and communicatively coupled to the sensing and interrogation unit using an optical communication path. The sensing units may be positioned at predetermined intervals, such as, for example, at equal distances from one another, and/or at any desired distances from one another and/or from the sensing and interrogation unit. The sensing and interrogation unit may include a transmitting optical device, such as, for example, a laser (e.g., a sweeping laser, a continuous wave laser, a multi-tone frequency laser, and any combination thereof) configured to generate and transmit an optical signal (e.g., an interrogation signal) to the plurality of sensing units, wherein the optical signals may be a single wavelength optical signal. It may also include a receiving optical device that may be communicatively coupled to the optical transmission path and configured to receive a plurality of reflected signals (e.g., optical signals that may be backscattered) in response to the optical signal.

The sensing and interrogation unit may be configured to transmit an optical signal to the plurality of sensing units for determining a status of one or more portions (e.g., spans) of the optical communication path. In response to transmission of such signal, it may also receive a plurality of reflected signals. As will be discussed herein, the reflected signals may be transformed in a frequency domain and a time domain. For example, the plurality of reflected signals may be transformed (e.g., using a windowed fast Fourier transform (FFT)) in the frequency domain to determine one or more locations in the optical communication path corresponding to an approximate location where reflection of the signals may have taken place. The reflected signals (that may have been transformed in the frequency domain) may then be transformed (e.g., using FFT) in the time domain to determine one or more changes to the reflected signal during a predetermined period of time (e.g., to determine what may have happed to the signal in time). The transformations may help determine a precise location of the reflected signal, and thus, a status of the optical communication link (e.g., whether there was interference, a break, a seismic event, etc.).

The interrogation and sensing unit may be configured to continuously process reflected optical signals by processing portions of signals that are being received in real time. For instance, the interrogation and sensing unit may be configured to process (e.g., transform in frequency and time domains using sliding windowed FFT) a first plurality of reflected signals that may be received during a first period of time and, while these signals are being processed, process subsequently received reflected signals (e.g., received during a second period of time). This may allow for an increase in acoustic range frequency.

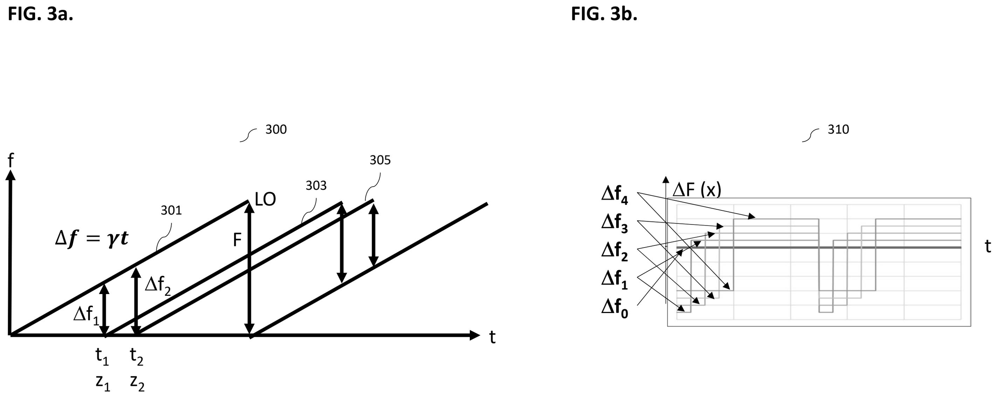

To perform determination of a status of optical communication path, the interrogation and sensing unit may be configured to implement various processing techniques based on optical frequency domain reflectometry (OFDR) or frequency modulated continuous wave (FMCW). Using the OFDR, a continuous wave (CW) laser of the interrogation and sensing unit, having a narrow linewidth, may be periodically modulated in frequency using a linear chirp, as shown, for example, by the plot 300 in FIG. 3a. The modulation may be performed while instantons amplitude and/or power is kept constant. In the plot 300, the line 301 may correspond to a chirped signal transmitted from the transmitter of the interrogation and sensing unit, where the same signal may also serve a local oscillator (LO) in the receiver of the interrogation and sensing unit. The laser frequency may then be modulated linearly using $\Delta f = yt$, where y is the frequency swept rate. In the receiver, a heterodyne detection may be typically implemented to beat the LO with signals that may be backscattered from a communication span being sensed in response to signals being transmitted from the transmitter. The distance of the fiber segment relative to the interrogation and sensing unit may be proportional to the beating frequency.

FIG. 3b illustrates a plot 310 showing relationships between beating frequencies (e.g., $\Delta f_1$ to $\Delta f_4$) and time in the receiver. The frequency $\Delta f_0 = 0$ may correspond to Rayleigh backscattering signal from the beginning of the communication link (e.g., a location in a first span between the interrogation and sensing unit and a first repeater). Frequencies, $\Delta f_1$ to $\Delta f_4$ may correspond to Rayleigh backscattering signals that may be reflected from respective locations $L_1$ to $L_4$ (e.g., $L_1$ may be a sensing span's length where reflected signal may be reflected position $z_1$ at time $t_1$, as shown by plot line 303 in FIG. 3a; $L_2$ may be another sensing span's length where reflected signal may be reflected position $z_2$ at time $t_2$, as shown by plot line 305 in FIG. 3a; etc.). Generally, a relationship between any position z (e.g., $z_1$, $z_2$, as shown in FIG. 3a) away from the interrogation and sensing unit and a beating frequency $\Delta f_z$ between the LO and sensing signal reflected at position z may be expressed as follows:

$$z = \frac{c}{2n}\frac{\Delta f_z}{\gamma} \text{ (for } \Delta f_z > 0) \text{ or } z = \frac{c}{2n}\frac{\Delta F + \Delta f_z}{\gamma} \text{ (for } \Delta f_z < 0) \tag{1}$$

where c is the light speed and n is the fiber refractive index.

The spatial resolution (SR) $L_{SR}$ for OFDR may be expressed as follows:

$$L_{SR} = \frac{c}{2n}\frac{1}{\Delta F} \tag{2}$$

where $\Delta F$ is the total frequency change and/or the chirp of the OFDR signal.

The receiver bandwidth may be determined using $\Delta f_L = \gamma \cdot 2nL/c$, instead of $\Delta F$ as shown in FIG. 3a (where L is the sensing link length). Since spatial resolution of OFDR is inversely proportional to the chirp $\Delta F$, very fine spatial resolution may be achieved. Some OFDR system perform $\mu$m to cm spatial resolution sensing, where sensing distance may be short (e.g., integrated device level to a few meters) to avoid processing of large amounts of data.

The current subject matter may be configured to use the OFDR technique to perform processing of reflected optical signals using a *windowed fast Fourier transform (FFT)* approach to achieve an acoustic sensing with Nyquist frequency greater than 1 kHz for 1Mm optical communication link. Alternatively, or in addition, the current subject matter may be configured to use the OFDR technique to perform processing of reflected signals using *a sliding window FFT* approach to achieve a Nyquist frequency of greater than 10 kHz for 1Mm optical link). Both approaches may be used to perform multi-span sensing using a single wavelength to cover a long subsea optical communication link, e.g., greater than 10,000 km (which may include all identical repeaters), without sacrificing acoustic frequency range.

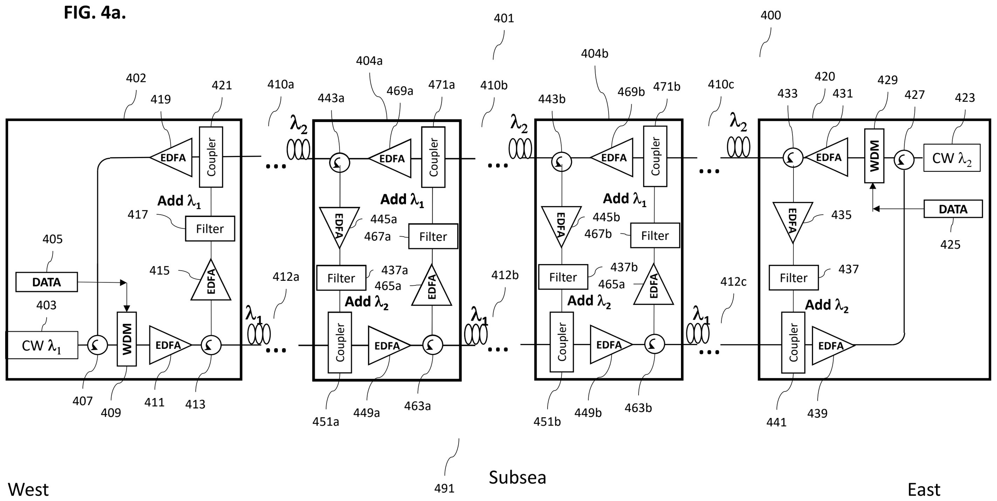

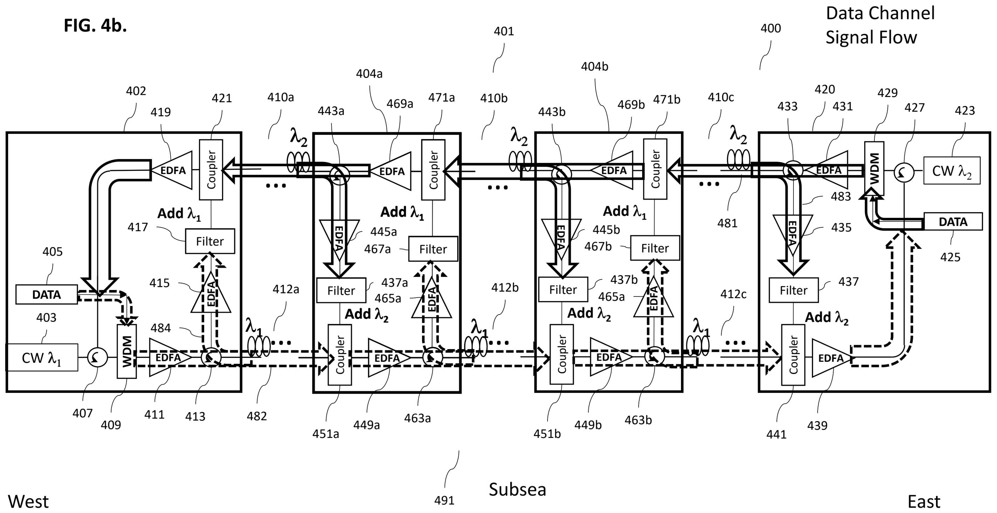

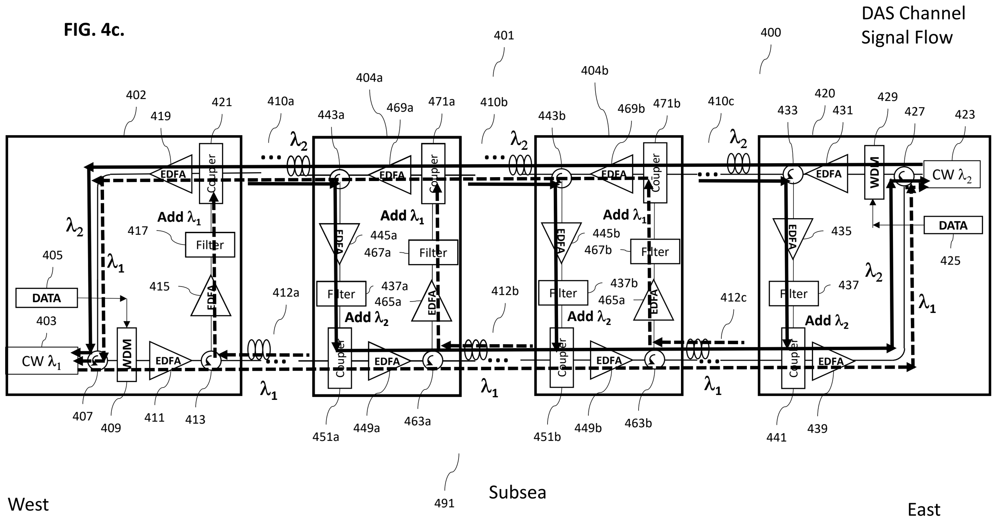

FIG. 4a illustrates an example optical communication system 400 that may be used for performing determination of a status of one or more portions (e.g., spans) of an optical communication path, according to some implementations of the current subject matter. FIG. 4b illustrates examples of data channel signal flows in the optical communication system 400, according to some implementations of the current subject matter. FIG. 4c illustrates examples of DAS channel signal flows in the optical communication system 400, according to some implementations of the current subject matter.

The system 400 may be used in a subsea/undersea environment and/or terrestrial environment. In particular, the system 400 may be used in interrogation and/or sensing (including DAS) environments for monitoring a span and/or a section of one or more optical paths and/or links that might not be directly communicatively coupled to an interrogation and sensing unit.

In operation, to perform monitoring of a sensing span encompassing one or more optical paths and/or portions thereof, a transmitter of an interrogation and sensing unit may be configured to generate an optical sensing signal (e.g., an interrogation pulse) that may be transmitted toward a monitored optical path. As will be discussed herein, the optical sensing signal may be configured to be transmitted via various optical devices (e.g., which may include one or more of a circulator, a coupler, an amplifier, a filter, and/or any other type of optical device, and/or any combination thereof). The pulse may be transmitted on an optical path toward one or more repeaters to reach a section of and/or entire optical path that may be desired to be monitored.

In response to receiving the interrogation pulse from the transmitter of the interrogation and sensing unit, the sensing span may be configured to reflect and/or backscatter the optical sensing signal all along the length of the sensing span. The reflected/backscattered signal may be configured to be transmitted back towards the receiver of the interrogation and sending unit. In particular, the reflected/backscattered signal may be transmitted over various optical paths that may include one or more optical devices (e.g., which may include one or more of a circulator, a coupler, an amplifier, a filter, and/or any other optical device, and/or any combination thereof). The interrogation and sensing unit may be configured to execute analysis of the received signal to determine whether there are any interferences, interruptions, etc. in the optical path based on perturbations in the backscattered signal and determine specific location of such interferences, interruptions, etc. The analysis may be performed using one or more processing components of the interrogation and sensing unit and may involve use of optical frequency domain reflectometry (OFDR) techniques. It may include collecting of one or more or a plurality of data points associated with backscattered/reflected signals and execution of a transformation of such points (e.g., using a fast Fourier transform (FFT)) in frequency and time domains to ascertain specific location of interferences, interruptions, etc.

The system 400 may be configured to allow co-propagation of signals on a data channel and a sensing channel. However, as can be understood, the data and sensing signals may be transmitted on separate channels. The system may be configured to include terminals (east and west sides, as shown in FIG. 4a) that may be configured to execute OFDR techniques for analysis of communication spans that may be positioned proximate to the output of each repeater in its direction (e.g., the terminals may monitor ½ of a span (e.g., in the east direction or in the west direction), and/or may monitor a full span (e.g., in both direction). Each repeater may include two loopback paths, each having an EDFA and an optical filter (which may be specific wavelength based). The EDFA may be used to boost a weak Rayleigh signal (e.g., signal reflected in response to a sensing signal), while the optical filter may filter out the co-propagating WDM data channels in one direction to avoid affecting data channels from the reverse direction. In the forward path, a loopback path and a backward path may be linked using a circulator and coupler.

Further, the system 400 may be configured to use only a single wavelength if the span length is less than 50km and/or the sensing sensitivity is not an issue. Moreover, when sensing is, for instance, needed only for the west to east direction, all components within a repeater (e.g., a circulator, EDFA, filter, a coupler, etc.) for the reverse loopback direction may be eliminated and/or remain inactive. The system 400 may have various technical benefits. The system 400 may be configured to have a full (e.g., 100%) duty cycle and use full (100%) OFDR power in the interrogation and sensing unit. Due to the full duty cycle and full power usage of the OFDR channel, the sensitivity of the system 400 may be much higher than existing systems, thereby simplifying the return path and reducing cost. Moreover, a single interrogation and sensing unit may be sufficient (e.g., one on each side for longer spans and higher sensitivity). Further, the system 400 may have minimum fading due to frequency diversity nature of the OFDR technique. It may also provide bi-directional sensing without any loss of sensitivity and/or errors. The system 400 may co-propagate with data channels, with little impact and/or no impact on and/or from data channels. Lastly, the system 400 may be configured to substantially eliminate transient effects in the EDFAs.

Referring to FIG. 4a, the system 400 may include terminals 402 and 420 that may be communicatively coupled using one or more optical communication paths 401, 491, at least portions of which may be disposed subsea and/or undersea. By way of a non-limiting example, the path 401 may communicatively couple terminal 402 to terminal 420 for transmission of signals in the west to east direction, and the path 491 may communicatively couple terminal 420 to terminal 402 for transmission of signals in the east to west direction. The path 401 may include one or more spans 410 (a, b, c) and similarly, the path 491 may include one or more spans 412 (a, b, c). As can be understood, the indicated directions and/or use of paths 401, 491 are provided here for illustrative, non-limiting purposes. Moreover, there may be any number of spans.

The west-end terminal 402 may include an interrogation and sensing unit 403 that may include a sensing signal source, e.g., a CW laser, for transmission of a sensing optical signal (e.g., having a single wavelength $\lambda_1$) toward terminal 420, a data source 405 for transmission of data on one or more optical data paths, a wave division multiplexing (WDM) component 409, an EDFA 411, a circulator 413, an EDFA 415, a bandpass filter 417, a coupler 421, and an EDFA 419. The interrogation and sensing unit 403 may be communicatively coupled to the circulator 407, which may route optical signals from the interrogation and sensing unit 403 (e.g., data channels from data source 405 and sensing signal having wavelength $\lambda_1$) as well as optical signals from the EDFA 419 (e.g., Rayleigh reflection signal at $\lambda_1$ and data channels from data source 425 in the terminal 420). The circulator 407 may be communicatively coupled to the WDM component 409, which may be used for processing optical and data signals, the latter originating from the data source 405. Once the signals are processed by the WDM component 409, the EDFA 411 may be configured to amplify them for transmission, via the circulator 413, along the optical path 491 toward the terminal 420. Alternatively, or in addition, the Rayleigh reflected sensing signals may be routed by the circulator 413 to the EDFA 415 for amplification. The amplified signals may then be filtered using filter 417 (e.g., $\lambda_1$ bandpass filter) and routed to the coupler 421 that may combine them with the signals received on the optical communication path 401 (Rayleigh reflection signal at $\lambda_1$ and data channels from data source 425 in the terminal 420). The combined signals may then be provided to the EDFA 419 for further amplification.

Similarly, the east-end terminal 420 may include an interrogation and sensing unit 423 that may include a sensing signal source (e.g., a CW laser) for transmission of a sensing optical signal (e.g., having wavelength $\lambda_2$) toward the terminal 402, a data source 425 for transmission of data on one or more optical data paths, a WDM component 429, an EDFA 431, a circulator 433, an EDFA 435, a bandpass filter 437, a coupler 441, and an EDFA 439. The interrogation and sensing unit 423 may be communicatively coupled to the circulator 427 for routing optical signals from the unit 423 (e.g., data channels from data source 425 and sensing signal having wavelength $\lambda_2$) and optical signals from the EDFA 439 (e.g., Rayleigh reflection signal at $\lambda_2$ and data channels from the data source 405 in terminal 402). The circulator 427 may be communicatively coupled to the WDM component 429, which may process optical and data signals. The WDM component 429 may route the signals to the EDFA 431 for amplification and subsequent transmission, via the circulator 433, along the optical path 401 toward the terminal 402. Alternatively, or in addition, the Rayleigh reflection signal from span 410c signals may be routed by the circulator 433 to the EDFA 435 and then filtered using filter 437 (e.g., $\lambda_2$ bandpass filter). The filtered signals may then be routed to the coupler 441 that may combine them with the signals received on the optical communication path 491 (Rayleigh reflection signal at $\lambda_2$ and data channels from data source 405 in the terminal 402). The combined signals may then be provided to the EDFA 439 for amplification.

The system 400 may also include one or more repeater components 404 (a, b). While only two repeaters 404 are shown in FIG. 4a, as can be understood, the system 400 may include any desired number of repeaters. The repeaters 404 may be communicatively coupled, using optical communication spans 410 (a, b, c) and 412 (a, b, c), respectively, to optical paths 401 and 491 and may be disposed subsea/undersea between the terminal 402 and the terminal 420. For example, the terminal 402 may be communicatively coupled to the repeater 404a using east-to-west optical communication span 410a and using west-to-east optical communication span 412a. Similarly, the repeater 404a may be communicatively coupled to the repeater 404b using east-to-west optical communication span 410b and using west-to-east optical communication span 412b, and the repeater 404b may be communicatively coupled to the terminal 420 using east-to-west optical communication span 410c and using west-to-east optical communication span 412c.

As stated above, the repeaters 404 may be positioned on the optical communication paths 401 and 491 for transmission (e.g., transmitting and/or receiving) of optical signals from west to east (e.g., path 401) and for transmission (e.g., transmitting and/or receiving) of optical signals (e.g., path 491) from east to west. As shown in FIG. 4a, the repeater 404a may be communicatively coupled to the span 412a for receiving signals transmitted from west to east and the span 410a for outputting signals transmitted from east to west. It may also be coupled to the span 412b for outputting signals processed by the repeater 404a, and span 410b for receiving signals transmitted from east to west.

The repeater 404a may include a coupler 451a, an EDFA 449a, and a circulator 463a that may be configured to process signals (e.g., data channels from data source 405 and signals having wavelength $\lambda_1$ and $\lambda_2$) received via the span 412a and outputting them to span 412b, while Rayleigh reflection signal from span 412b is routed to EDFA 465a (e.g., for amplification) and filter 467a (e.g., $\lambda_1$-based filter) via circulator 463a. The signals filtered by the filter 467a may be provided to the coupler 471a, which may couple them with the signals received from the span 410b (e.g., data channels from data source 425 and sensing signal having wavelength $\lambda_1$ and $\lambda_2$). The coupler 471a may also be communicatively coupled to the EDFA 469a, which in turn, may be coupled to the circulator 443a. The circulator 443a may transmit the signals to the span 410a (e.g., data channels, $\lambda_2$ sensing signal and $\lambda_1$ sensing signal from loopback), and/or while Rayleigh reflection signal from span 410a is routed to EDFA 445a and the filter 437a (e.g., $\lambda_2$-based filter).

As discussed above, the circulators 443a and 463a may be configured to redirect signals transmitted and/or received by the repeater 404a on optical communication paths 401 and/or 491, whereas the EDFAs 445a, 449a, 465a, and 469a may be configured to amplify Rayleigh reflected signals from loopbacks and transmitted and/or received signals that are being transmitted between west and east sides (and vice versa) of the repeater 404a. The filters 437a and 467a may be configured to apply wavelength filtering techniques to filter one of sensing wavelengths (e.g., $\lambda_1$, $\lambda_2$). Thus, using the multiple EDFAs and filters, the repeater 404a may be configured to enhance signal power of the transmitted and/or reflected signals. The structure and/or operation of the repeater 404b (and/or any other repeater that may be used in the system 400) may be similar to the structure and/or operation of the repeater 404a. However, as can be understood, each repeater positioned on the communication paths 401 and 491 may be similar and/or different from another repeater. The structure and/or operation of each repeater may be determined based on specific requirements and/or design of the optical communication system.

Referring to FIG. 4b, as discussed herein, the optical communication system 400 may be configured to transmit one or more data signals from one or more data sources 405 and 425 via one or more data channels. For example, a data signal from the data source 405 may be transmitted via a data channel 482 to data source 425 from west to east (shown in dashed lines in FIG. 4b). Similarly, a data signal from the data source 425 may be transmitted via a data channel 481 (shown in solid lines in FIG. 4b) to data source 405 from east to west. The data channels 482, 481 may be separate from optical communication paths 491, 401, respectively, and/or may be part of these paths. In some implementations, data signals 484 (e.g., reflected Rayleigh signals from fiber) transmitted from the circulator 413 via EDFA 415 in the terminal 402 may be removed using filter 417 to reduce penalty to signal 481. The repeaters 404 may likewise use respective filters 467 to filter out such data signals. Similarly, data signals 483 (e.g., reflected Rayleigh signals from fiber) transmitted from the circulator 433 via EDFA 435 in the terminal 420 may be removed using filter 437 to reduce penalty to signal 482. Again, the repeaters 404 may use respective filters 437 to filter out data signals in a similar fashion.

As shown in FIG. 4c and as discussed herein, the optical communication system 400 may be used to transmit and/or receive one or more sensing signals (e.g., DAS signals) between terminals 402 and 420. The sensing signal(s) may be transmitted and/or received using optical communication paths 401 and/or 491. The interrogation and sensing unit 403 of the terminal 402 may be configured to transmit one or more sensing signals using wavelength $\lambda_1$ through one or more repeaters 404 and toward the terminal 420. The transmission path of such signal is shown in dashed lines. Any signals, having the same wavelength $\lambda_1$, that may be reflected back may be transmitted via one or more repeaters 404 toward the terminal 402. The transmission paths of such reflected signals are likewise shown in dashed lines in FIG. 4c. Similarly, the interrogation and sensing unit 423 of the terminal 420 may transmit a sensing signal using wavelength $\lambda_2$ in the westward direction toward the terminal 402. The transmission path of such westward-bound sensing signal is shown in solid lines. Reflected signals of the same wavelength may be transmitted via one or more repeaters 404 toward the terminal 420 (as shown by the solid lines in FIG. 4c).

It should be noted while EDFAs are shown as the amplifiers implemented by the system 400, any other type of amplifiers may be used, e.g., rare earth doped fiber amplifiers, Raman amplifiers, semiconductor optical amplifiers (SOAs), etc. Further, the amplifiers may be similar and/or different from one another and/or from one component (e.g., terminals 402, 420, repeaters 404, etc.) to another.

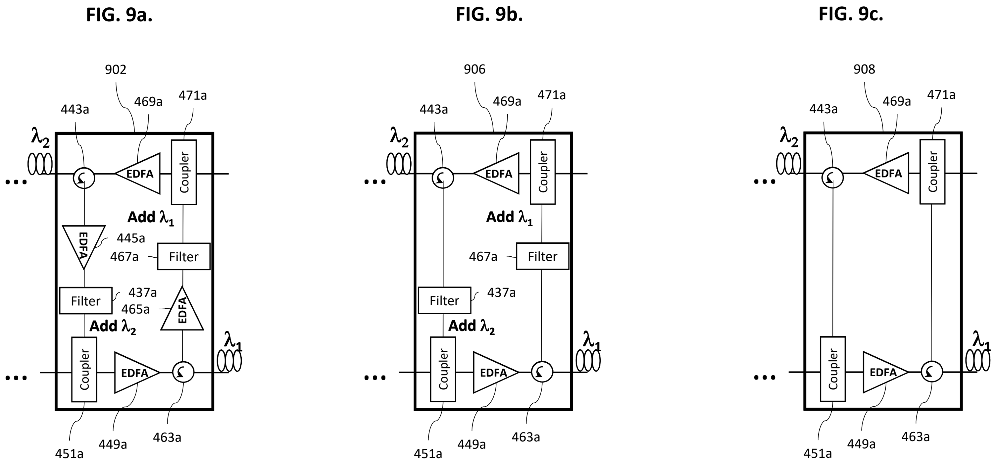

FIGS. 9a-c illustrate various implementations of the repeaters that may be implemented in the system 400. FIG. 9a illustrates a repeater 902, which is similar to repeaters 404 (a, b) shown in FIG. 4a, where the repeater may use loopback amplification and bandpass filtering. FIG. 9b illustrates an example repeater 904 that is similar to the repeater 902 but without use of the EDFAs between the filters and the circulators. This repeater may be used in smaller systems. The repeater 906 may provide bandpass filtering to remove reflected data channels. FIG. 9c illustrates an example repeater 906, which is similar to the repeaters 902 and 904 but without use of the loopback EDFAs and filters. The repeater 906 may provide a simple loopback processing and may be used for an even smaller system. As can be understood, any type of repeaters may be used.

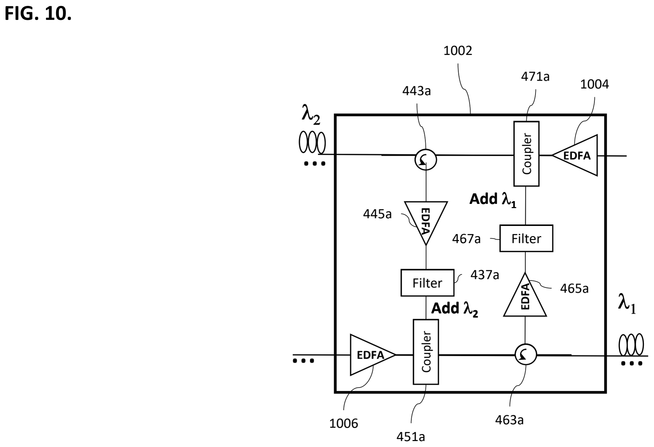

FIG. 10 illustrates another implantation of a repeater 1002 that may be used in the system 400. The repeater 1002 may be similar to the repeaters 404, with EDFAs 1004 and 1006 being positioned prior to the couplers 471a, 451a, respectively. The repeater 1002 may be configured as an out-to-out repeater, while repeaters shown in FIG. 4a and 9a-c may be configured as out-to-in repeaters. The repeater 1002 may be further modified to remove various components, e.g., one or more of loopback filters 437a, 467a and/or one or more of loopback EDFAs 445a, 465a, similar to the implementations shown in FIGS. 9b-c.

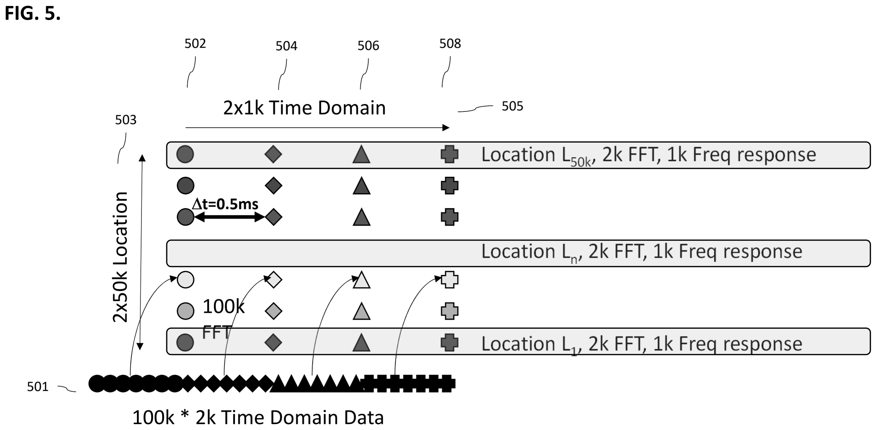

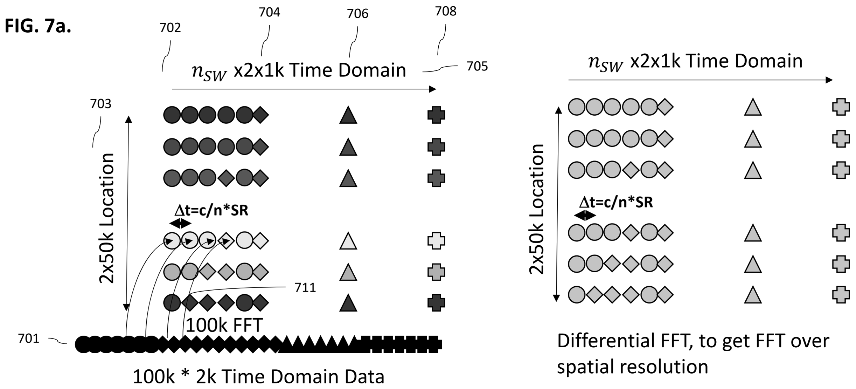

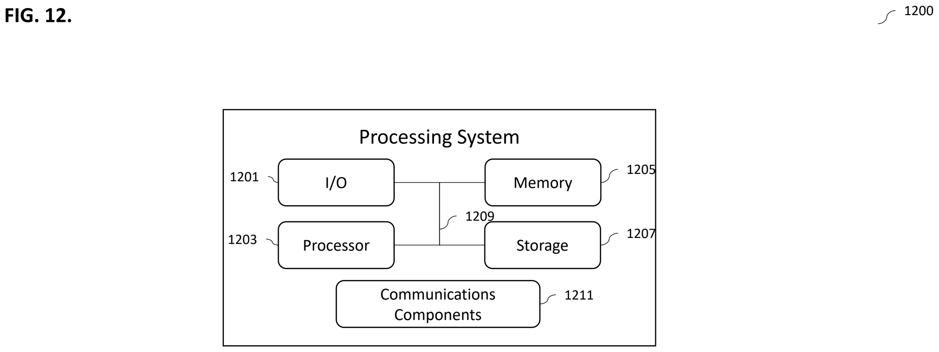

The following discussion, with reference to FIGS. 5-8, illustrates an example OFDR-based processing by one or more of the terminals 402, 420. In particular, the interrogation and sensing unit (e.g., unit 403 of the terminal 402) may be configured to include a processing component and/or a system (such as for example, a processing component and/or a system shown in FIG. 12) that may execute such OFDR-based processing. FIGS. 5-6b illustrate a windowed OFDR-based processing of signals by the system 400, and FIGS. 7a-8 illustrate sliding window OFDR-based processing of signals by the system 400.

In the system, after a full frequency sweep and beating unit, the interrogation (e.g., a DAS interrogation unit) may digitize a signal using its analog-to-digital converter (ADC) and apply a fast Fourier transform (FFT) to the full sweep data to generate an acoustic response with the spatial resolution (SR), as defined using Equation (2) above. By repeating the frequency sweep, a periodic perturbation signal may be recovered as long as the frequency of the perturbation signal is less than half of the chirp sweep repetition rate. In some scenarios, the OFDR sweep period may be at least twice the flight time of a link. Thus, for a 10,000 km optical communication link, the round-trip time may be approximately 100 milliseconds (ms), thereby producing a chirp repetition rate of less than 10Hz and the maximum acoustic frequency for detection of less than 5Hz.

The current subject matter, e.g., the system 400, may be configured to increase the acoustic frequency detection range, using a windowed FFT technique shown in FIG. 5. By way of a non-limiting example, for a 10,000 km link with 200-meter spatial resolution, the system 400 may be configured to include 50,000 "sensors". To cover 1 kHz of acoustic frequency range, an interrogation rate (IR) of the interrogation and sensing unit 403 (and/or unit 423) may be at least 2 kHz. Thus, the unit 403 may be configured to generate a total throughput of 200 MS/s. Alternatively, or in addition, the unit 403 (and/or the terminal 402) may include an ADC with a throughput of greater than 200 MS/s.

Referring to FIG. 5, and using the example above (i.e., 10,000 km, 50,000-sensor optical communication link), the interrogation and sensing unit 403 (and/or 423) of the system 400 may be configured to acquire first 100,000 data points. To resolve 50,000 sensors, twice the number of sampling points may be needed in accordance with the Nyquist sampling theorem (which states that an analog signal can be digitized without aliasing error if and only if the sampling rate is greater than or equal to twice the highest frequency component in a given signal). Next, the unit 403 may convert the horizontal time-domain data 501 (e.g., 100,000 data points represented by solid circles 502 (similarly for points represented by diamonds 504, triangles 506, and plus signs 508), as shown in FIG. 5) to a vertical frequency data 503 (e.g., 2x50,000 data points, one pair set for each sensed location). This may be accomplished by determining an FFT of the 100,000 time-domain data 501 points using $nFFT1 = 2L_{link}/L_{SR} = 100k$ and obtaining 100,000 frequency points 503, one positive and one negative frequency data point corresponding to each sensor location (as, for example is shown in FIG. 3b). Next, the interrogation and sensing unit 403 may determine a sum of the power of the optical signal from the same location (e.g., one in positive frequency and one in negative frequency) (e.g., producing 50,000 vertical data points). The unit 403 may repeat these operations 2,000 times to generate a 50,000 x 2,000 matrix 503.

The unit 403 may then rearrange the data, and determine 50,000 FFT, each with 2,000 points, using $nFFT2 = 2k = 2f_{Nyquist}$. The result of this determination may correspond to 2,000 equivalent acoustic sampling point(s) for each sensed location (e.g., 50,000 total) 505. In some example implementations, this operation may be optional, such as, for instance, when frequency domain information may be required.

The interrogation and sensing unit 403 (and/or 423) may execute the above operations as many times as desired for continuously monitoring the 10,000 km link with 200m spatial resolution and 1kHz acoustic frequency range. Moreover, if an ADC with a higher sampling rate (e.g., $R_{ADC}$=1GS/s) is used by the unit 403 and/or the terminal 402, the high data rate may be down sampled after averaging. The number of averages may be determined using

$$\mathrm{nAve} = \frac{R_{ADC}/IR}{nFFT1} = 5 \qquad (3)$$

where $nFFT_1$ corresponds to FFT points of the first FFT performed during conversions of horizontal dime domain data, IR corresponds to the equivalent interrogation rate, and $R_{ADC}$ corresponds to the ADC sampling rate ($R_{ADC} = nAve * NFFT_1 * nFFT_2$).

As can be understood, the above example is provided for illustrative purposes only and is not intended to limit the subject matter of the present application. Any length optical communication links may be monitored using any desired spatial resolution and/or using any desired acoustic frequency range.

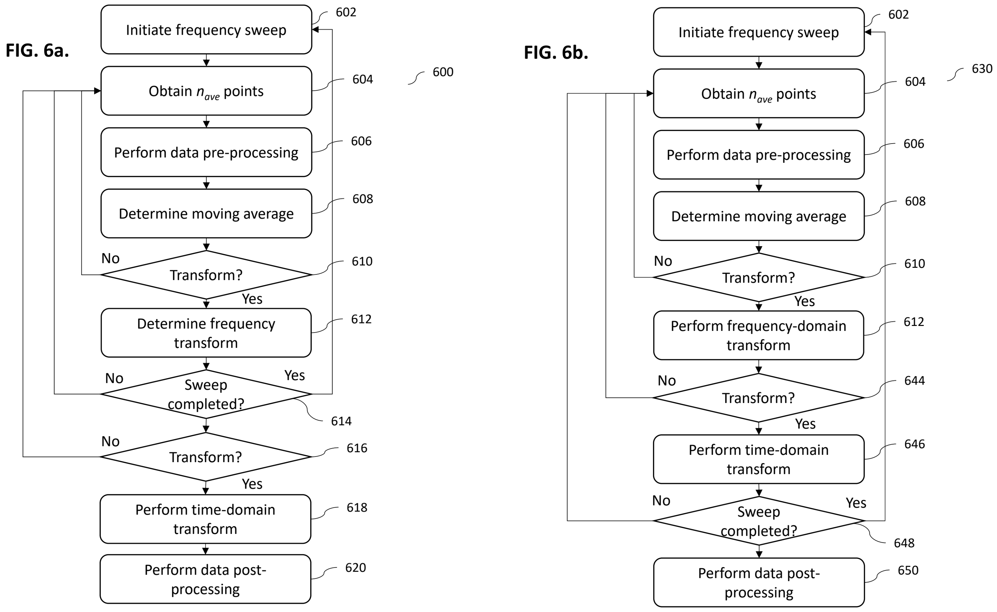

FIG. 6a illustrates an example process 600 for performing a windowed FFT by the interrogation and sensing unit 403 and/or terminal 402, according to some implementations of the current subject matter. At 602, the unit 403 may initiate a frequency sweep and obtain number of averages, *nAve,* data points, at 604. The unit 403 may then perform data pre-processing (e.g., which may include forming serial data stream from two polarization (pol) IQ data or single pol data, filtering to remove noise, etc.), at 606.

At 608, the interrogation and sensing unit 403 may determine moving average(s) and determine whether a first transform (FFT$_1$) may need to be determined, at 610. If not, more points may be obtained, at 604. Otherwise, as discussed herein, at 612, the transform may be accomplished by determining an FFT of time-domain data 501 points using nFFT1 =2$L_{link}$/$L_{SR}$ and obtaining frequency points 503, one positive and one negative frequency data point corresponding to each sensed location. At 614, the unit 403 may check whether frequency sweep has been completed. If not, further data points may be obtained at 602. At 616, the unit 403 may determine whether a second transform needs to be determined. If not, more points may be obtained at 604. Otherwise, a time-domain transform may be performed, at 618. This may be accomplished using nFFT2 = 2$f_{Nyquist}$, which may result in equivalent interrogation rate(s) for each sensed location. At 620, the unit 403 may execute data post-processing (e.g., extracting phase information from the FFT data, perform further phase processing, etc.). It should be noted that the equivalent interrogation period might not be the same as the chirp repetition period. For example, the system 400 may be designed with one chirp repetition period covering multiple number of equivalent interrogation periods. When the interrogation periods are longer than the chirp repetition rate, the order of several blocks (e.g., including the second FFT) may need to be switched, as shown in FIG. 6b.

FIG. 6b illustrates another example process 630 for performing a windowed FFT by the interrogation and sensing unit 403 and/or terminal 402, according to some implementations of the current subject matter. The process 630 is similar to the process 600 shown in FIG. 6 and performs same order of operations until and including operation 612. Subsequently, at 644 (similar to operation 616 in FIG. 6a), a determination of whether the second transform may need to be performed is made by the unit 403. If not, the processing goes back to 604 to obtain more data points. Otherwise, a second transform (i.e., time-domain transform) may be performed, at 646 (this operation is similar to operation 616 shown in FIG. 6a). At 648 (similar to operation 614 in FIG. 6a), the unit 403 may determine whether the sweep has been completed and if not, the unit 403 may go back to 604 to obtain further data points. Otherwise, post processing may be performed, at 650 (similar to operation 620 in FIG. 6a).

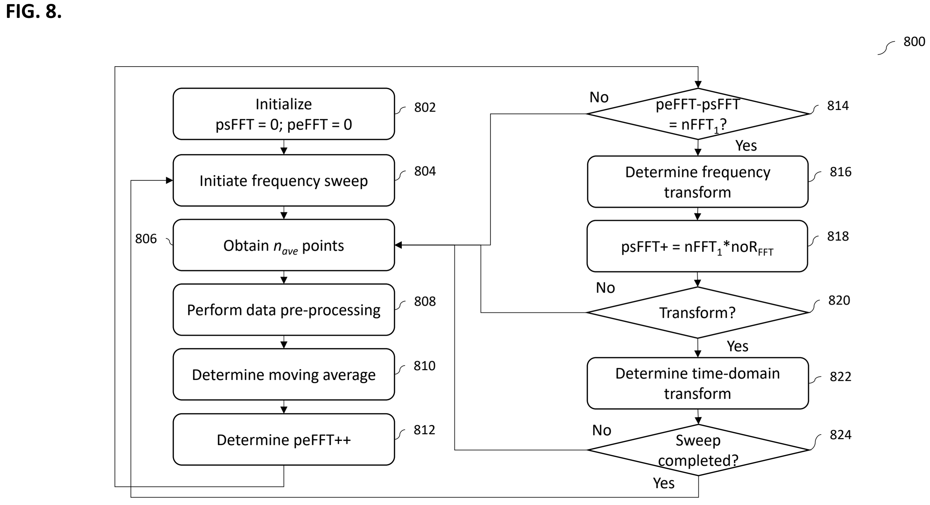

At stated above, FIGS. 7a-b and 8 illustrate a sliding window FFT operation that may be performed by the system 400 in an effort to increase a range of acoustic frequency.

Using the above windowed scheme, a maximum equivalent interrogation rate may be determined using

$$IR = R_{ADC} \frac{L_{SR}}{2L_{link}} \text{ when } nAve = 1 \qquad (4)$$

To reach a higher interrogation rate, the unit 403's ADC sampling rate $R_{ADC}$ may be increased accordingly. To do so, the interrogation and sensing unit 403 may be configured to execute a sliding window technique, which may achieve a higher interrogation rate with relatively lower $R_{ADC}$. The unit 403 may define a FFT non-overlap ratio as noR$_{FFT}$ (0, 1], where noR$_{FFT}$ =1 for the windowed process discussed above with regard to FIGS. 5-6b, or, alternatively, or in addition, noR$_{FFT}$ =0 when no FFT window overlapping is defined. When noR$_{FFT}$ is 0.5, the unit 403 may double the FFT results for the same amount of time domain data, thereby doubling the acoustic frequency response. Using the example discussed above with regard to FIG. 5 (i.e., 10,000 km link with 200 m spatial resolution, 200 MS/s throughput ADC), the unit 403 may be configured to cover 10 kHz acoustic frequency range and/or 20 kHz equivalent interrogation rate. Since the Nyquist frequency is 1 kHz, the unit 403 may need to execute 10 times more oversampling, or $noR_{FFT}$ = 0.1.

Referring to FIG. 7a, and using the example above, the interrogation and sensing unit 403 (and/or 423) may be configured to execute a sliding windowed FFT process. Initially, the unit 403 may acquire the first 100, 000 data points, and set a starting data pointer equal to 0.

Next, the unit 403 may convert the horizontal time-domain data 701 (e.g., 100,000 data points represented by solid circles 702 (similarly for points represented by diamonds 704, triangles 706, and plus signs 708), as shown in FIG. 7a) to a vertical frequency data 703 (e.g., 100,000 data points, one pair set for each sensed location). This may be accomplished by determining an FFT of the 100,000 time-domain data 701 points using nFFT1 = $2L_{link}/L_{SR}$ = 100k and obtaining 100,000 frequency points 703, one positive and one negative frequency data point corresponding to each sensor location (as, for example is shown in FIG. 3b). Next, the interrogation and sensing unit 403 may determine a sum of the power of the optical signal from the same location (e.g., one in positive frequency and one in negative frequency) (e.g., producing 50,000 vertical data points).

Then, the unit 403 may acquire another 10,000 (1/10 of the initial 100,000 data points) data points 711, and advance the data pointer by 10,000 (e.g., from 10,000 to 110,000). The unit 403 may then perform the above conversion operation using the acquired data from 10,000 to 110,000. These operations may be repeated 20,000 times to generate a 50,000 x 20,000 matrix 703.

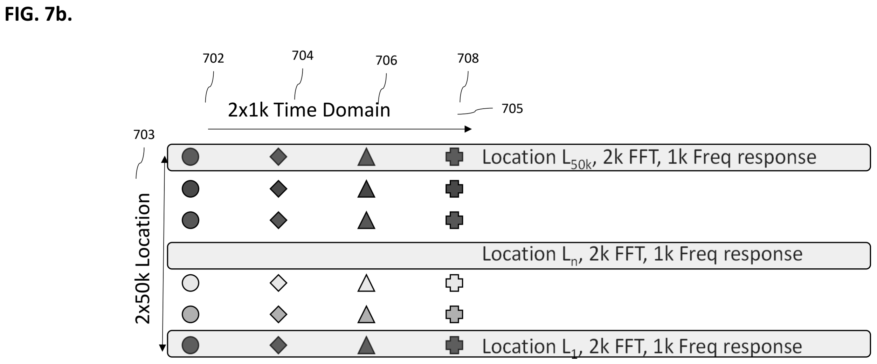

The unit 403 may then rearrange the data and differentiate each row's result (from the same location) to determine system 400's response from only the newly added data points (e.g., points 711, as shown in FIG. 7a). The unit 403 may then determine 50,000 FFT, each with 20,000 points, using nFFT2 = $20k = 20f_{Nyquist}$. The result of this determination may correspond to 20,000 equivalent acoustic sampling point(s) for each sensed location (e.g., 50,000 total) 505, as shown in FIG. 7b. In some example implementations, this operation may be optional, such as, for instance, when frequency domain information may be required.

The interrogation and sensing unit 403 (and/or 423) may execute the above operations as many times as desired for continuously monitoring the 10,000 km link with 200m spatial resolution and 10kHz acoustic frequency range. Moreover, if an ADC with a higher sampling rate (e.g., $R_{ADC}$=1GS/s) is used by the unit 403 and/or the terminal 402, the high data rate may be down sampled after averaging. The number of averages may be determined using

$$\text{nAve} = \frac{R_{ADC}/[IR \cdot noR_{FFT}]}{nFFT1} = 5 \tag{6}$$

where $nFFT_1$ corresponds to the FFT points of the frequency-domain FFT, IR corresponds to the equivalent interrogation rate, and $R_{ADC}$ corresponds to the ADC sampling rate.

FIG. 8 illustrates an example process 800 for performing a sliding window FFT by the interrogation and sensing unit 403 and/or terminal 402, according to some implementations of the current subject matter. At 802, the unit 403 may be configured to initiate starting and ending FFT pointers (e.g., psFFT - FFT staring pointer, and peFFT - FFT ending pointer). These pointers may be used to control the $FFT_1$ process, where peFFT++ may be equivalent to peFFT= peFFT+1, and psFFT+=nFFT1*$noR_{FFT}$ may be equivalent to psFFT= psFFT +nFFT1*$noR_{FFT}$.

The unit 403 may then initiate a frequency sweep, at 804, and obtain number of averages, *nAve,* data points, at 806. The unit 403 may then perform data pre-processing (e.g., which may include forming serial data stream from two polarization (pol) IQ data or single pol data, filtering to remove noise, etc.), at 808.

At 810, the unit 403 may determine moving average(s) and determine peFFT++ using the above relation, at 812. At 814, the unit 403 may determine whether the first transform may need to be performed, i.e., whether peFFT-psFFT = $nFFT_1$. If not, more points may be obtained, at 806. Otherwise, as discussed herein, at 816, the unit 403 may perform the frequency transform, i.e., by determining an FFT of time-domain data 701 points using nFFT1 = $2L_{link}/L_{SR}$ and obtaining frequency points 703 corresponding to each sensed location. At 818, the unit 403 may increase psFFT by nFFT1*$noR_{FFT}$, and at 820, determine whether the second transform may need to be performed. If not, further data points may be obtained at 806. Otherwise, a time-domain transform may be determined, at 822, and a check whether frequency sweep has been completed, at 824, may be performed. If not, further data points may be obtained at 806.

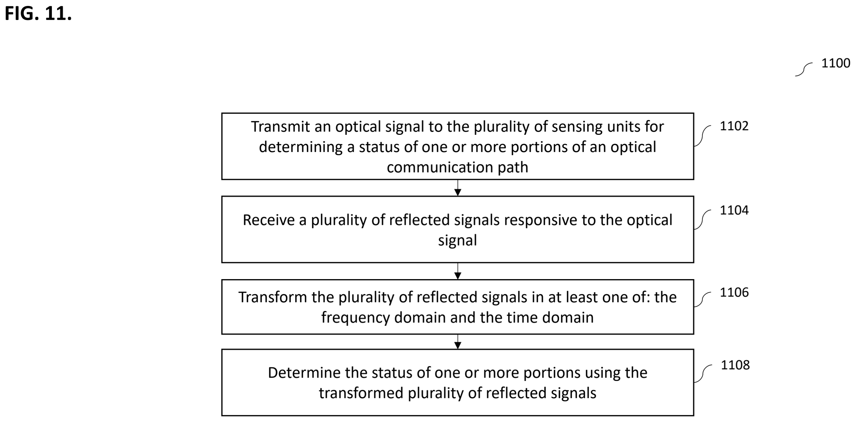

FIG. 11 example process 1100 for monitoring an optical transmission path in an optical transmission system, according to the current subject matter. The method 1100 may be performed by an interrogation and sensing unit 403 and/or 423 and/or terminals 402 and/or 420 (e.g., in the system 400 shown in FIG. 4a).

At 1102, the unit 403 may transmit an optical signal to the plurality of sensing units for determining a status of one or more portions of an optical communication path, and 1104, it may receive a plurality of reflected signals responsive to the optical signal. The unit 403 may then perform one or more transforms of (in accordance with the discussion shown in FIGS. 5-8) the plurality of reflected signals in at least one of: a frequency domain and a time domain, at 1106. At 1108, the unit 403 may determine the status of one or more portions using the transformed plurality of reflected signals. The unit 403 may implement one or more processing system and/or components to perform the process 1100. An example of such a processing system is illustrated in FIG. 12.

As shown in FIG. 12, the processing system 1200 may include an input/output (I/O) device 1201, a processor 1203, a memory 1205, a storage 1207, and one or more communication components 1211. Each of the components 1201-907 may be interconnected using a system bus 1209. The processor 1203 may be configured to process instructions for execution within system 1200. In some implementations, the processor 1203 may be a single-threaded processor. Alternatively, or in addition, the processor 1203 may be a multi-threaded processor. The processor 1203 may be further configured to process instructions stored in the memory 1205 and/or in the storage 1207, including, but not limited to, receiving and/or sending information through the I/O device 1201. The memory 1205 may store information within the system 1200. In some implementations, the memory 1205 may be a computer-readable medium. Alternatively, or in addition, the memory 1205 may be a volatile memory unit. In yet some implementations, the memory 1205 may be a non-volatile memory unit. The storage 1207 may be capable of providing mass storage for the system 1200. In some implementations, the storage 1207 may be a computer-readable medium. Alternatively, or in addition, the storage 1207 may be a floppy disk device, a hard disk device, an optical disk device, a tape device, non-volatile solid-state memory, or any other type of storage device. The I/O device 1201 may provide input/output operations for the system 1200. In some implementations, the I/O device 1201 may include a keyboard and/or pointing device. Alternatively, or in addition, the I/O device 1201 may include a display unit for displaying graphical user interfaces.

One or more components of the system 1200 may include any combination of hardware and/or software. One or more components of the system 1200 may be disposed on one or more computing devices, such as, server(s), database(s), personal computer(s), laptop(s), cellular telephone(s), smartphone(s), tablet computer(s), virtual reality devices, and/or any other computing devices and/or any combination thereof. One or more components of the system 1200 may be disposed on a single computing device and/or may be part of a single communications network. Alternatively, or in addition to, such services may be separately located from one another.

The system 1200's one or more components may include network-enabled computers. As referred to herein, a network-enabled computer may include, but is not limited to a computer device, or communications device including, e.g., a server, a network appliance, a personal computer, a workstation, a phone, a smartphone, a handheld PC, a personal digital assistant, a thin client, a fat client, an Internet browser, or other device. One or more components of the system 1200 also may be mobile computing devices, for example, an iPhone, iPod, iPad from Apple® and/or any other suitable device running Apple's iOS® operating system, any device running Microsoft's Windows®. Mobile operating system, any device running Google's Android® operating system, and/or any other suitable mobile computing device, such as a smartphone, a tablet, or like wearable mobile device.

The system 1200 may include a processor and a memory, and it is understood that the processing circuitry may contain additional components, including processors, memories, error and parity/CRC checkers, data encoders, anti-collision algorithms, controllers, command decoders, security primitives and tamper-proofing hardware, as necessary to perform the functions described herein. One or more components of the system 1200 may further include one or more displays and/or one or more input devices. The displays may be any type of devices for presenting visual information such as a computer monitor, a flat panel display, and a mobile device screen, including liquid crystal displays, light-emitting diode displays, plasma panels, and cathode ray tube displays. The input devices may include any device for entering information into the user's device that is available and supported by the user's device, such as a touchscreen, keyboard, mouse, cursor-control device, touchscreen, microphone, digital camera, video recorder or camcorder. These devices may be used to enter information and interact with the software and other devices described herein.

One or more components of the system 1200 may execute one or more applications, such as software applications, that enable, for example, network communications with one or more components of system 1200 and transmit and/or receive data.

One or more components of the system 1200 may include and/or be in communication with one or more servers via one or more networks and may operate as a respective front-end to back-end pair with one or more servers. One or more components of the system 1200 may transmit, for example, from a mobile device application (e.g., executing on one or more user devices, components, etc.), one or more requests to one or more servers. The requests may be associated with retrieving data from servers. The servers may receive the requests from the components of the system 1200. Based on the requests, servers may be configured to retrieve the requested data from one or more databases. Based on receipt of the requested data from the databases, the servers may be configured to transmit the received data to one or more components of the system 1200, where the received data may be responsive to one or more requests.

The system 1200 may include and/or be communicatively coupled to one or more networks. In some implementations, networks may be one or more of a wireless network, a wired network or any combination of wireless network and wired network and may be configured to connect the components of the system 1200 and/or the components of the system 1200 to one or more servers. For example, the networks may include one or more of a fiber optics network, a passive optical network, a cable network, an Internet network, a satellite network, a wireless local area network (LAN), a metropolitan area network (MAN), a wide area network (WAN), a virtual local area network (VLAN), an extranet, an intranet, a Global System for Mobile Communication, a Personal Communication Service, a Personal Area Network, Wireless Application Protocol, Multimedia Messaging Service, Enhanced Messaging Service, Short Message Service, Time Division Multiplexing based systems, Code Division Multiple Access based systems, D-AMPS, Wi-Fi, Fixed Wireless Data, IEEE 802.11b, 802.15.1, 802.11n and 802.11g, Bluetooth, NFC, Radio Frequency Identification (RFID), Wi-Fi, and/or any other type of network and/or any combination thereof.

In addition, the networks may include, without limitation, telephone lines, fiber optics, IEEE Ethernet 802.3, a wide area network, a wireless personal area network, a LAN, or a global network such as the Internet. Further, the networks may support an Internet network, a wireless communication network, a cellular network, or the like, or any combination thereof. The networks may further include one network, or any number of the exemplary types of networks mentioned above, operating as a stand-alone network or in cooperation with each other. The networks may utilize one or more protocols of one or more network elements to which they are communicatively coupled. The networks may translate to or from other protocols to one or more protocols of network devices. The networks may include a plurality of interconnected networks, such as, for example, the Internet, a service provider's network, a cable television network, corporate networks, and home networks.

The system 1200 may include and/or be communicatively coupled to one or more servers, which may include one or more processors that maybe coupled to memory. Servers may be configured as a central system, server or platform to control and call various data at different times to execute a plurality of workflow actions. Servers may be configured to connect to the one or more databases. Servers may be incorporated into and/or communicatively coupled to at least one of the components of the system 1200.

The various elements of the components as previously described with reference to FIGS. 1-12 may include various hardware elements, software elements, or a combination of both. Examples of hardware elements may include devices, logic devices, components, processors, microprocessors, circuits, processors, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), memory units, logic gates, registers, semiconductor device, chips, microchips, chip sets, and so forth. Examples of software elements may include software components, programs, applications, computer programs, application programs, system programs, software development programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. However, determining whether an implementation is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given implementation.

One or more aspects may be implemented by representative instructions stored on a machine-readable medium which represents various logic within the processor, which when read by a machine causes the machine to fabricate logic to perform the techniques described herein. Such representations, known as "IP cores", may be stored on a tangible, machine readable medium and supplied to various customers or manufacturing facilities to load into the fabrication machines that make the logic or processor. Some implementations may be implemented, for example, using a machine-readable medium or article which may store an instruction or a set of instructions that, if executed by a machine, may cause the machine to perform a method and/or operations in accordance with the implementations. Such a machine may include, for example, any suitable processing platform, computing platform, computing device, processing device, computing system, processing system, computer, processor, or the like, and may be implemented using any suitable combination of hardware and/or software. The machine-readable medium or article may include, for example, any suitable type of memory unit, memory device, memory article, memory medium, storage device, storage article, storage medium and/or storage unit, for example, memory, removable or non-removable media, erasable or non-erasable media, writable or rewritable media, digital or analog media, hard disk, floppy disk, Compact Disk Read Only Memory (CD-ROM), Compact Disk Recordable (CD-R), Compact Disk Rewritable (CD-RW), optical disk, magnetic media, magneto-optical media, removable memory cards or disks, various types of Digital Versatile Disk (DVD), a tape, a cassette, or the like. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.

The components and features of the devices described above may be implemented using any combination of discrete circuitry, application specific integrated circuits (ASICs), logic gates and/or single chip architectures. Further, the features of the devices may be implemented using microcontrollers, programmable logic arrays and/or microprocessors or any combination of the foregoing where suitably appropriate. It is noted that hardware, firmware and/or software elements may be collectively or individually referred to herein as "logic" or "circuit."

It will be appreciated that the exemplary devices shown in the block diagrams described above may represent one functionally descriptive example of many potential implementations. Accordingly, division, omission or inclusion of block functions depicted in the accompanying figures does not infer that the hardware components, circuits, software and/or elements for implementing these functions would necessarily be divided, omitted, or included in implementations.

At least one computer-readable storage medium may include instructions that, when executed, cause a system to perform any of the computer-implemented methods described herein.

In one aspect, an optical communication system may include a sensing and interrogation unit; and a plurality of sensing units positioned on and communicatively coupled to the sensing and interrogation unit using an optical communication path; the sensing and interrogation unit being configured to transmit an optical signal to the plurality of sensing units for determining a status of one or more portions of an optical communication path; receive a plurality of reflected signals responsive to the optical signal; transform the plurality of reflected signals in at least one of: the frequency domain and the time domain; and determine the status of the one or more portions using the transformed plurality of reflected signals.

The system may include wherein the optical signal is a single wavelength optical signal.

The system may include wherein the plurality of reflected signals are transformed in the frequency domain to determine one or more locations in the optical communication path corresponding to an approximate location of a reflected signal in the plurality of reflected signals.

The system may include wherein the plurality of reflected signals transformed in the frequency domain are transformed in the time domain to determine one or more changes to the reflected signal during a predetermined period of time, and determine a precise location of the reflected signal.

The system may include wherein transformations of the reflected signals in the frequency domain and the time domain are performed using a fast Fourier transform.

The system may include wherein the plurality of reflected signals includes at least a portion of a first plurality of reflected signals received during a first period of time and at least a portion of a second plurality of reflected signals received during a second period of time, wherein the second period of time is subsequent to the first period of time.

The system may include wherein the sensing and interrogation unit includes a transmitting optical device configured to transmit the optical signal to the plurality of sensing units.

The system may include wherein the transmitting device includes a laser source configured to generate the optical signal.

The system may include wherein the laser source includes at least one of the following: a sweeping laser, a continuous wave laser, a multi-tone frequency laser, and any combination thereof.

The system may include wherein the sensing and interrogation unit includes a receiving optical device communicatively coupled to the optical transmission path and configured to receive the plurality of reflected signals.

The system may include wherein the optical communication path is a distributed acoustic sensing optical transmission path.

The system may include wherein the optical signal includes an interrogation signal.

In one aspect, a method for monitoring an optical transmission path in an optical transmission system, the optical transmission system includes a sensing and interrogation unit and a plurality of sensing units positioned on the optical transmission path, where the method may include transmitting an optical signal to the plurality of sensing units for determining a status of one or more portions of an optical communication path; receiving a plurality of reflected signals responsive to the optical signal; transforming the plurality of reflected signals in at least one of: the frequency domain and the time domain; and determining the status of the one or more portions using the transformed plurality of reflected signals.

The method may include wherein the optical signal is a single wavelength optical signal.

The system may include wherein the plurality of reflected signals are transformed in the frequency domain to determine one or more locations in the optical communication path corresponding to an approximate location of a reflected signal in the plurality of reflected signals.

The system may include wherein the plurality of reflected signals transformed in the frequency domain are transformed in the time domain to determine one or more changes to the reflected signal during a predetermined period of time, and determine a precise location of the reflected signal.

The system may include wherein transformations of the reflected signals in the frequency domain and the time domain are performed using a fast Fourier transform.

The system may include wherein the plurality of reflected signals includes at least a portion of a first plurality of reflected signals received during a first period of time and at least a portion of a second plurality of reflected signals received during a second period of time, wherein the second period of time is subsequent to the first period of time.

The system may include wherein the sensing and interrogation unit includes a transmitting optical device configured to transmit the optical signal to the plurality of sensing units; and a receiving optical device communicatively coupled to the optical transmission path and configured to receive the plurality of reflected signals.

The system may include wherein the transmitting device includes a laser source configured to generate the optical signal, wherein the laser source includes at least one of the following: a sweeping laser, a continuous wave laser, a multi-tone frequency laser, and any combination thereof.

It is emphasized that the Abstract of the Disclosure is provided to allow a reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single implementation for the purpose of streamlining the disclosure. This method of disclosure is not to be interpreted as reflecting an intention that the claimed implementations require more features than are expressly recited in each claim. Rather, as the following claims reflect, inventive subject matter lies in less than all features of a single disclosed implementation. Thus, the following claims are hereby incorporated into the Detailed Description, with each claim standing on its own as a separate implementation. In the appended claims, the terms "including" and "in which" are used as the plain-English equivalents of the respective terms "comprising" and "wherein," respectively. Moreover, the terms "first," "second," "third," and so forth, are used merely as labels, and are not intended to impose numerical requirements on their objects.

What has been described above includes examples of the disclosed architecture. It is, of course, not possible to describe every conceivable combination of components and/or methodologies, but one of ordinary skill in the art may recognize that many further combinations and permutations are possible. Accordingly, the novel architecture is intended to embrace all such alterations, modifications and variations that fall within the spirit of the appended claims.

The foregoing description of example implementations has been presented for the purposes of illustration and description. It is not intended to be exhaustive or to limit the present disclosure to the precise forms disclosed. Many modifications and variations are possible in light of this disclosure. It is intended that the scope of the present disclosure be limited not by this detailed description, but rather by the claims appended hereto. Future filed applications claiming priority to this application may claim the disclosed subject matter in a different manner and may generally include any set of one or more limitations as various disclosed or otherwise demonstrated herein.

## Claims

1.  An optical communication system (400), comprising:

    an interrogation and sensing unit (403, 423); and
    a plurality of sensing units positioned on and communicatively coupled to the interrogation and sensing unit using an optical communication path (401, 491);
    the interrogation and sensing unit being configured to

    transmit (1102) an optical signal to the plurality of sensing units for determining a status of one or more portions (410a, 410b, 410c, 412a, 412b, 412c) of an optical communication path;
    receive (1104) a plurality of reflected signals responsive to the optical signal;
    transform (1106) the plurality of reflected signals in at least one of: a frequency domain and a time domain; and
    determine (1108) the status of the one or more portions using the transformed plurality of reflected signals.

2.  The system of claim 1, wherein the optical signal is a single wavelength optical signal.

3.  The system of claim 1 or 2, wherein the plurality of reflected signals is transformed in the frequency domain to determine one or more locations in the optical communication path corresponding to an approximate location of a reflected signal in the plurality of reflected signals.

4.  The system of claim 3, wherein the plurality of reflected signals transformed in the frequency domain are transformed in the time domain to

    determine one or more changes to the reflected signal during a predetermined period of time, and
    determine a precise location of the reflected signal.

5.  The system of claim 4, wherein transformations of the reflected signals in the frequency domain and the time domain are performed using a fast Fourier transform.

6.  The system of any of the preceding claims, wherein the plurality of reflected signals includes at least a portion of a first plurality of reflected signals received during a first period of time and at least a portion of a second plurality of reflected signals received during a second period of time, wherein the second period of time is subsequent to the first period of time.

7. The system of any of claims 1-6, wherein the interrogation and sensing unit includes a transmitting optical device configured to transmit the optical signal to the plurality of sensing units.

8. The system of any of claims 1-7, wherein the transmitting device includes a laser source configured to generate the optical signal.

9. The system of claim 8, wherein the laser source includes at least one of the following: a sweeping laser, a continuous wave laser, a multi-tone frequency laser, and any combination thereof.

10. The system of any of claims 1-9, wherein the interrogation and sensing unit includes a receiving optical device communicatively coupled to the optical transmission path and configured to receive the plurality of reflected signals.

11. The system of any of claims 1-10, wherein the optical communication path is a distributed acoustic sensing optical transmission path.

12. The system of any of claims 1-11, wherein the optical signal includes an interrogation signal.

13. A method for monitoring the optical transmission path in the optical transmission system of any of claims 1-12, the method comprising:

transmitting the optical signal to the plurality of sensing units for determining the status of the one or more portions of the optical communication path;
receiving the plurality of reflected signals responsive to the optical signal;
transforming the plurality of reflected signals in at least one of: the frequency domain and the time domain; and
determining the status of the one or more portions using the transformed plurality of reflected signals.

14. The method of claim 13, further comprising transforming the plurality of reflected signals in the frequency domain to determine the one or more locations in the optical communication path corresponding to the approximate location of the reflected signal in the plurality of reflected signals.

15. The method of claim 13 or 14, further comprising transforming the plurality of reflected signals transformed in the frequency domain in the time domain to determine the one or more changes to the reflected signal during the predetermined period of time, and determine the precise location of the reflected signal, wherein transformations of the reflected signals in the frequency domain and the time domain are performed using the fast Fourier transform.

FIG. 1.

**FIG. 2b.**

**FIG. 2a.**

EP 4 729 897 A1

**FIG. 3a.**

**FIG. 3b.**

FIG. 4a.

**FIG. 4b.**

Data Channel Signal Flow

West    Subsea    East

FIG. 4c.

DAS Channel Signal Flow

EP 4 729 897 A1

West

Subsea

East

EP 4 729 897 A1

## FIG. 5.

502    504    506    508

**2x1k Time Domain** → 505

503

2x50k Location

Location $L_{50k}$, 2k FFT, 1k Freq response

$\Delta t=0.5ms$

Location $L_n$, 2k FFT, 1k Freq response

100k FFT

Location $L_1$, 2k FFT, 1k Freq response

501

100k * 2k Time Domain Data

FIG. 6a.

FIG. 6b.

EP 4 729 897 A1

**FIG. 7a.**

$n_{SW}$ x2x1k Time Domain

2x50k Location

$\Delta t = c/n*SR$

100k FFT

100k * 2k Time Domain Data

$n_{SW}$ x2x1k Time Domain

2x50k Location

$\Delta t = c/n*SR$

Differential FFT, to get FFT over spatial resolution

EP 4 729 897 A1

**FIG. 7b.**

EP 4 729 897 A1

**FIG. 8.**

800

Initialize
psFFT = 0; peFFT = 0 — 802

Initiate frequency sweep — 804

Obtain $n_{ave}$ points — 806

Perform data pre-processing — 808

Determine moving average — 810

Determine peFFT++ — 812

peFFT-psFFT = nFFT$_1$? — 814
No / Yes

Determine frequency transform — 816

psFFT+ = nFFT$_1$*noR$_{FFT}$ — 818

Transform? — 820
No / Yes

Determine time-domain transform — 822

Sweep completed? — 824
No / Yes

FIG. 9a.

FIG. 9b.

FIG. 9c.

EP 4 729 897 A1

**FIG. 10.**

**FIG. 11.**

1100

| Transmit an optical signal to the plurality of sensing units for determining a status of one or more portions of an optical communication path | 1102 |

↓

| Receive a plurality of reflected signals responsive to the optical signal | 1104 |

↓

| Transform the plurality of reflected signals in at least one of: the frequency domain and the time domain | 1106 |

↓

| Determine the status of one or more portions using the transformed plurality of reflected signals | 1108 |

**FIG. 12.**

1200

Processing System

| | |
|---|---|
| 1201 I/O | 1205 Memory |
| 1209 | |
| 1203 Processor | 1207 Storage |

Communications
Components — 1211

EP 4 729 897 A1

## EUROPEAN SEARCH REPORT

**Application Number**

EP 25 20 9216

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/121840 A1 (UNIV RAMOT [IL]) 13 June 2024 (2024-06-13) * paragraphs [0001], [0002], [0008] – [0014], [0042], [0117] – [0158]; claims 1-20; figures 1-10 * | 1-15 | INV. G01H9/00 G01M11/00 H04J14/00 |
| X | US 2018/196152 A1 (KARABACAK DEVREZ MEHMET [NL] ET AL) 12 July 2018 (2018-07-12) * paragraph [0027] - paragraph [0046]; claims 1-20; figures 1-10; examples 1,3,4,6,7 * | 1-8, 10-15 | ADD. G01V1/22 |
| X | EP 3 881 034 B1 (FIBER SENSE LTD [AU]) 24 April 2024 (2024-04-24) * paragraphs [0036] - [0036], [0040], [0080] - [0081], [0098]; claims 1-31; figures 1-25 * | 1-15 | |
| X | US 2019/211671 A1 (SKINNER NEAL G [US] ET AL) 11 July 2019 (2019-07-11) * paragraphs [0017], [0023] - paragraphs [0031], [0035]; claims 1-14; figures 1A-7B; tables 1-4 * | 1-5,7,8, 10-15 | |
| X | US 2013/113629 A1 (HARTOG ARTHUR H [GB] ET AL) 9 May 2013 (2013-05-09) * paragraphs [0037] - [0049]; claims 1-15; figures 1-8 * | 1,7-12 | TECHNICAL FIELDS SEARCHED (IPC) G01H G01M H04J G01V |

The present search report has been drawn up for all claims

| Place of search | Date of completion of the search | Examiner |
|---|---|---|
| The Hague | 4 March 2026 | Oliveira Braga K., A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 9216

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2026

| Patent document cited in search report | | | Publication date | Patent family member(s) | | Publication date |
|---|---|---|---|---|---|---|
| WO 2024121840 | A1 | | 13-06-2024 | CN | 120322655 A | 15-07-2025 |
| | | | | EP | 4630764 A1 | 15-10-2025 |
| | | | | WO | 2024121840 A1 | 13-06-2024 |
| US 2018196152 | A1 | | 12-07-2018 | AU | 2016293943 A1 | 08-02-2018 |
| | | | | EP | 3320376 A1 | 16-05-2018 |
| | | | | US | 2018196152 A1 | 12-07-2018 |
| | | | | WO | 2017010875 A1 | 19-01-2017 |
| EP 3881034 | B1 | | 24-04-2024 | AU | 2019380874 A1 | 17-06-2021 |
| | | | | CA | 3119376 A1 | 22-05-2020 |
| | | | | EP | 3881034 A1 | 22-09-2021 |
| | | | | ES | 2984018 T3 | 28-10-2024 |
| | | | | JP | 7483702 B2 | 15-05-2024 |
| | | | | JP | 2022507455 A | 18-01-2022 |
| | | | | SG | 11202104703Y A | 29-06-2021 |
| | | | | US | 2022018980 A1 | 20-01-2022 |
| | | | | WO | 2020097682 A1 | 22-05-2020 |
| US 2019211671 | A1 | | 11-07-2019 | US | 2019211671 A1 | 11-07-2019 |
| | | | | WO | 2018067135 A1 | 12-04-2018 |
| US 2013113629 | A1 | | 09-05-2013 | CA | 2854124 A1 | 10-05-2013 |
| | | | | GB | 2510999 A | 20-08-2014 |
| | | | | US | 2013113629 A1 | 09-05-2013 |
| | | | | WO | 2013066654 A1 | 10-05-2013 |

EPO FORM P0459